# DEMANDE DE BREVET EUROPEEN

(11) **EP 1 470 878 A1**
(43) Date de publication de la demande: **27.10.2004**
(21) Numéro de dépôt: 03405279.5
(22) Date de dépôt: 22.04.2003
(51) Int. Cl.: B23B 27/08

(54) **Outil de coupe à plaquette rapportée**

(71) Demandeur: Applitec Moutier S.A., 2740 Moutier (CH)
(72) Inventeur: Champion, François, 2740 Moutier (CH); Schaller, Vincent, 2742 Perrefitte (CH)
(74) Mandataire: Gresset, Jean

(57) **Abrégé**

L'invention concerne un outil de coupe à plaquette rapportée, du type comportant:
- un porte-plaquette (10) comprenant une assise (24) munie de creusures (26), rectilignes, définissant un axe longitudinal AA,
- une plaquette d'usinage (12) qui comprend une base (38) destinée à prendre place contre l'assise (24) du porte-plaquette (10), ladite base étant dotée de saillies (50) rectilignes, parallèles à l'axe AA et de forme complémentaire à celle des creusures (26), et
- des moyens de fixation de la plaquette (12) sur le porte-plaquette (10).

Ladite plaquette (12) comporte une plage (52) libre de saillie, intercalée entre lesdites saillies, et en ce que ledit porte-plaquette (10) comporte une plage (28) libre de creusures, en regard de ladite plage (52) de la plaquette.

Ledit porte-plaquette (10) et ladite plaquette (12) comportent, en outre, disposés sur chacune desdites plages, des moyens de positionnement (30,54) longitudinal de l'un par rapport à l'autre.

## Description

La présente invention se rapporte au domaine de l'usinage. Elle concerne, plus particulièrement, un outil de coupe à plaquette rapportée, du type formé d'un porte-plaquette, d'une plaquette d'usinage en métal dur, par exemple, en carbure de tungstène, et de moyens de fixation de la plaquette sur le porte-plaquette.

Les carbures utilisés pour réaliser la plaquette conservent leurs caractéristiques physiques même à très haute température, ce qui permet ainsi de travailler à des vitesses de coupe élevées. Malheureusement, ces matériaux sont fragiles et coûteux. C'est pourquoi le porte-plaquette est fabriqué dans un autre type de matériau, par exemple de l'acier trempé, qui est plus élastique, facilement usinable et de moindre coût.

Comme présenté dans le document PCT/CH 00/00335 au nom de la demanderesse, le porte-plaquette comporte, généralement, un logement destiné à recevoir la plaquette, dont une paroi munie de creusures forme une assise. La plaquette comprend une base munie de saillies, destinées à coopérer, avec l'assise, la forme des creusures et des saillies étant complémentaire. Les moyens de fixation sont constitués d'une ou deux vis, engagées dans des trous pratiqués dans la plaquette et vissées dans des taraudages du porte-plaquette pour les rendre solidaires. Le logement comporte, en outre, une paroi d'appui. Les structures de l'assise du porte-plaquette et de la plaquette sont telles que, une fois vissés l'un à l'autre, la plaquette est appliquée et positionnée contre cette paroi.

Les saillies sont réalisées par frittage. Pour obtenir une précision suffisante, il peut être nécessaire de les rectifier afin qu'elles s'appliquent parfaitement contre les creusures. Cette opération étant coûteuse, la demanderesse a développé une structure de plaquette particulière, décrite dans le document EP 01810254.1, dans laquelle sa base présente une concavité longitudinale. Ceci permet d'assurer un contact des saillies sur les extrémités des creusures, de sorte que le positionnement soit garanti et reproductible. Dans une telle plaquette, seules les vis de serrages assurent son positionnement longitudinal dans le porte-plaquette avec une précision insuffisante pour certaines applications.

Ces outils étant utilisés sur des machines de production industrielle, leur entretien doit pouvoir se faire dans les meilleurs délais. C'est pourquoi le positionnement de la plaquette sur le porte-plaquette doit être rapide et précis, de manière à éviter à l'opérateur d'effectuer un nouveau réglage de la machine lors du changement de plaquette.

La présente invention a pour but de proposer une plaquette de coupe et un porte-plaquette dont les structures facilitent et garantissent leur positionnement tridimensionnel.

De façon plus précise, l'invention concerne un outil de coupe à plaquette rapportée, du type comportant :
- un porte-plaquette comprenant une assise munie de creusures, rectilignes, définissant un axe longitudinal AA,
- une plaquette d'usinage qui comprend une base destinée à prendre place contre l'assise du porte-plaquette, ladite base étant dotée de saillies rectilignes, parallèles à l'axe AA et de forme complémentaire à celle des creusures, et
- des moyens de fixation de la plaquette sur le porte-plaquette.

Selon l'invention, l'outil de coupe est caractérisé en ce que :
- la plaquette comporte une plage libre de saillie, intercalée entre lesdites saillies,
- le porte-plaquette comporte une plage libre de creusure, en regard de la plage disposée sur la plaquette,
- le porte-plaquette et la plaquette comportent, en outre, disposés sur chacune des plages, des moyens pour assurer le positionnement longitudinal de l'un par rapport à l'autre.

Avantageusement, les moyens de positionnement comprennent une gorge pratiquée dans l'une des plages et un ergot disposé sur l'autre plage et destiné à être engagé dans la gorge.

L'outil présente encore l'une ou l'autre des caractéristiques suivantes :
- la gorge est disposée dans la portion centrale de l'une des plages du porte-plaquette et de la plaquette,
- la gorge est de forme oblongue et comprend un fond et une paroi comportant deux portions semi-cylindriques reliées par deux portions planes perpendiculaires à l'axe AA et définissant sa longueur,
- l'ergot est disposé dans la portion centrale de la plage du porte-plaquette ou de la plaquette, laissée libre par la gorge,
- l'ergot est de forme oblongue et comprend une extrémité et une paroi comportant des portions semi-cylindriques reliées entre elles par des portions planes perpendiculaires à l'axe AA et définissant sa longueur, qui est légèrement plus faible que celle de la gorge,
- la plaquette comporte deux saillies latérales s'étendant sur toute la longueur de la base, et au moins deux saillies intermédiaires disposées entre les saillies latérales et définissant entre elles la plage libre de saillie, et
- les saillies latérales présentent une concavité dans le sens longitudinal, de manière à ce que leurs extrémités soient en contact avec l'assise du porte-plaquette.

Selon un premier mode de réalisation, les arêtes des saillies latérales sont droites et présentent deux portions externes de hauteur h1, reliées par une portion centrale bordant la plage libre de saillie de la plaquette et de hauteur h2, inférieure à la hauteur h1.

Eventuellement, dans ce cas, la transition entre les portions externes et la portion centrale se fait par l'intermédiaire d'une arête en biseau.

Selon un deuxième mode de réalisation, les arêtes des saillies latérales sont courbes.

Il peut être particulièrement intéressant que les moyens de fixation soient constitués de deux vis qui prennent place dans des trous ménagés au centre des plages de la plaquette et du porte-plaquette, l'ergot et la gorge étant disposés au milieu des trous.

D'autres caractéristiques de l'invention apparaîtront plus clairement à la lecture de la description qui suit, faite en référence au dessin annexé, dans lequel :
- la figure 1 est une vue en perspective d'un outil de coupe à plaquette rapportée,
- la figure 2 est une vue en coupe d'un détail d'une plaquette de coupe et d'un porte-plaquette selon l'invention, comportant une vue agrandie, et
- les figures 3a, 3b, 4a, 4b et 5a, 5b sont des vues de face et de dessus de plaquettes de coupe selon différents modes de réalisation de l'invention.

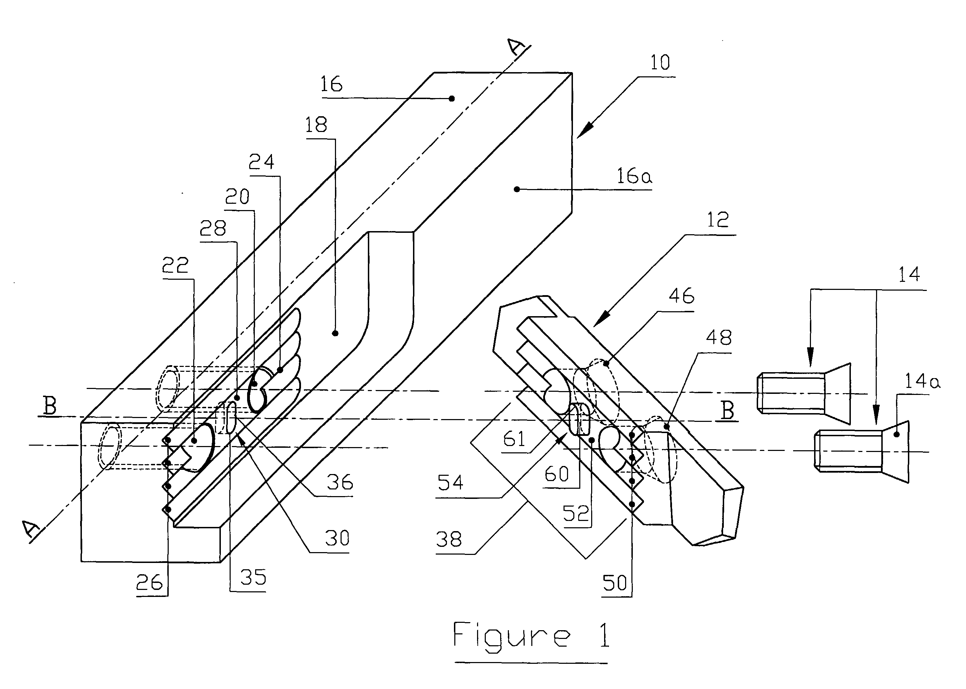

L'outil de coupe représenté sur la figure 1 comporte un porte-plaquette 10, une plaquette de coupe 12 et des vis 14 à tête conique 14a tenant lieu de moyens de fixation de la plaquette 12 sur le porte-plaquette 10.

De façon schématique, le porte-plaquette 10 est constitué d'un corps 16 en acier, de forme parallélépipédique allongée et d'axe longitudinale AA, dont une face 16a comporte un dégagement pratiqué dans l'un de ses coins et servant de logement 18 à la plaquette 12. Deux trous taraudés 20 et 22, destinés à recevoir les vis 14, traversent le corps 16 perpendiculairement à la face 16a et débouchent dans le logement 18.

Le fond du logement 18 est parallèle à la face 16a et définit une assise 24. Cette dernière est dotée de creusures 26, rectilignes, parallèles à l'axe AA et disposées symétriquement par rapport à un plan qui passe par le centre des trous 20 et 22. Les creusures 26 occupent toute la largeur de l'assise 24, à l'exception d'une zone comprise entre les trous 20 et 22, qui forme ainsi une plage 28 libre de toute creusure.

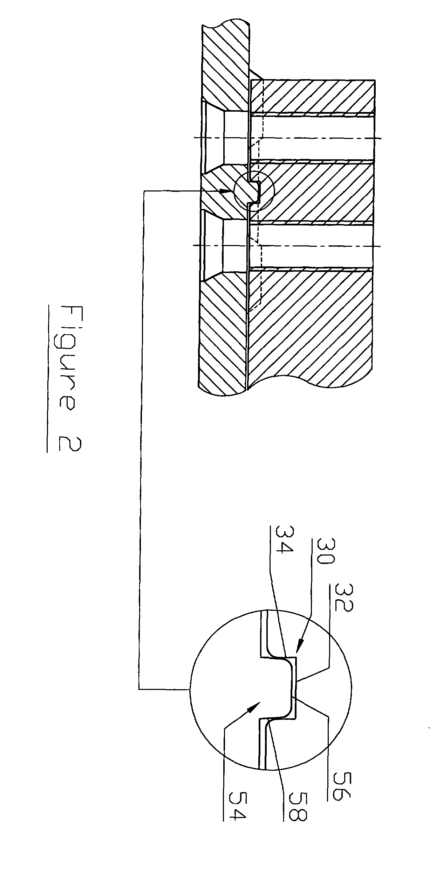

Une gorge 30 de forme oblongue est pratiquée au centre de la plage 28. Elle comprend un fond 32 et une paroi 34, comportant deux portions semi-cylindriques 35 reliées par deux portions planes 36 perpendiculaires à l'axe AA. Ces dernières définissent sa longueur, sensiblement égale au diamètre des trous 20 et 22, c'est à dire de l'ordre de 3mm. Sa profondeur, sensiblement égale à celle des creusures 26, est, typiquement, de 1 mm et sa largeur, orientée selon AA, est de 1.5 mm. Comme le montre particulièrement la vue agrandie de la figure 2, l'intersection entre l'assise 24 et la paroi 34 de la gorge est arrondie et présente un rayon de courbure de 0.3 mm, tandis que celle entre la paroi 34 et le fond 32 de la gorge 30 est droite.

On comprendra plus loin que la largeur et la position de la gorge 30 doivent être réalisées avec minutie, car c'est elles qui déterminent la précision du positionnement de la plaquette 12 sur le porte-plaquette 10. La gorge 30 est réalisée par fraisage avec une tolérance de l'ordre de 0.01 mm.

La plaquette de coupe 12 est de forme générale prismatique. Elle comporte une base 38 destinée à prendre place contre l'assise 24 du porte-plaquette 10. Plus particulièrement, la plaquette 12 comprend une partie centrale 40 bordée, de part et d'autre et selon l'axe AA, par deux ailes 42 sur chacune desquelles est ménagée une zone de coupe 44, pour effectuer l'opération de coupe proprement dite. Elle est réalisée dans un matériau fritté, en carbure de tungstène, par exemple, qui peut être recouvert d'une couche en matériau encore plus dur, généralement du nitrure de titane.

La partie centrale 40 est traversée, perpendiculairement à l'axe AA, par deux trous 46 et 48 débouchant dans la base 38 et destinés à recevoir les vis 14. Elle est dotée, au niveau de la base 38, de saillies 50 rectilignes, parallèles à l'axe AA et de forme complémentaire à celle des creusures 26. Des saillies latérales 50a s'étendent sur toute la longueur de la base 38 alors que des saillies médianes 50b s'étendent du voisinage des trous 46 et 48 vers les ailes 42. Les saillies 50 occupent ainsi toute la base 38, à l'exception d'une zone comprise entre les saillies latérales 50a et les trous 46 et 48, qui forme ainsi une plage 52 libre de toute saillie.

Les saillies 50 sont disposées symétriquement par rapport à un plan qui passe par le centre des trous 46 et 48 et par rapport à un axe BB perpendiculaire à l'axe AA, et situé à mi-distance entre les trous 46 et 48.

On notera que la présence des saillies 50a sur le pourtour de la plage 52 et donc sur toute la longueur de la partie centrale 40 renforce considérablement la rigidité de la plaquette 12 et, notamment, sa tenue mécanique au cours des opérations de coupe.

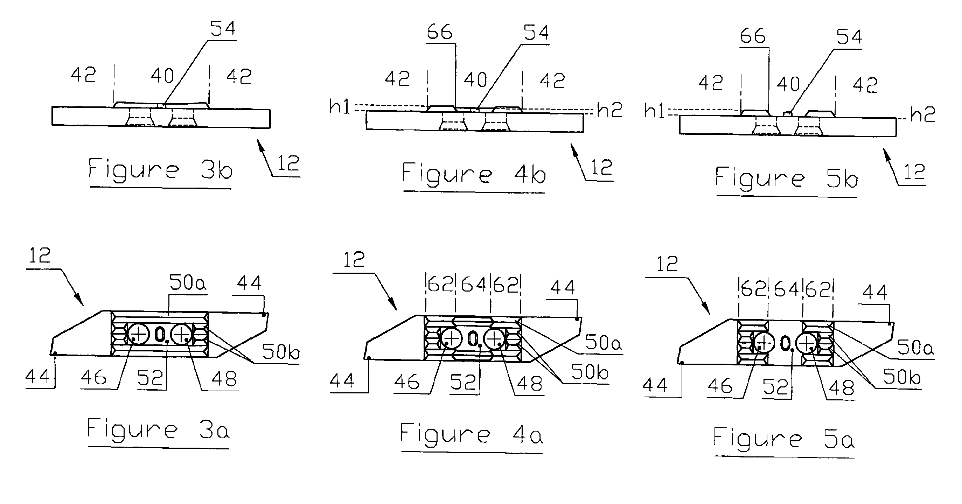

Selon un premier mode de réalisation de l'invention illustré sur les figures 3a et 3b et comme l'explique le document EP 01810254.1 déjà cité, les saillies 50, et plus particulièrement les saillies 50a, présentent une concavité dans le sens longitudinal, de manière à ce que leurs extrémités soient en contact avec l'assise du porte-plaquette. Avantageusement, les arêtes des saillies 50 sont courbes.

Un ergot 54 de forme oblongue est disposé au centre de la plage 52. Il est défini par une extrémité 56 et par une paroi 58 comportant deux portions semi-cylindriques 61 reliées entre elles par des portions planes 60 perpendiculaires à l'axe AA. Celles-ci définissent sa longueur, légèrement plus faible que celle de la gorge 30. Son épaisseur est voisine de la profondeur de la gorge 30, typiquement de 0.8 mm. Les parois 58 sont légèrement coniques et forment un angle au sommet de l'ordre de 8°. Comme le montre particulièrement la vue agrandie de la figure 2, l'intersection entre la paroi 58 et l'extrémité 56 de l'ergot 52 est arrondie et présente un rayon de courbure de 0.3 mm.

Ainsi, lorsque l'on assemble la plaquette 12 et le porte-plaquette 10, les extrémités de la base 38 viennent s'appuyer sur l'assise 24, les saillies 50 s'engagent dans les creusures 26, garantissant la précision de leur positionnement, latéralement et en hauteur. En outre, l'ergot 54 pénètre dans la gorge 30. Grâce à la forme conique de celui-ci, les portions 58 de l'ergot et 34 de la gorge 30 sont en contact direct et maintenues par les vis de serrage 14. C'est la butée de l'ergot 54 dans la gorge 30 et, plus exactement, des parois 58 de l'ergot sur les parois 34 de la gorge 30 qui assure la précision du positionnement longitudinal de la plaquette 12 sur le porte-plaquette 10. Eventuellement, pour précision encore accrue, les parois pourront être rectifiées.

Une fois les vis serrées, plus aucun mouvement relatif des éléments de l'outil de coupe n'est possible. Par ailleurs, les portions arrondies de l'ergot 54 et de la gorge 30 facilitent leur mise en place.

Selon un deuxième mode de réalisation illustré sur les figures 4a et 4b, les arêtes des saillies 50 sont droites. Elles présentent deux portions externes 62 occupant chacune environ le quart de la base 38 sur lesquelles les saillies latérales 50a et médianes 50b ont une hauteur h1 de l'ordre de 0,8 mm. Sur une portion centrale 64 reliant les deux portions latérales 62 les saillies latérales 50a ont une hauteur h2 de l'ordre de 0,6 mm, inférieure à la hauteur h1 de l'ordre de 0,2 mm. La transition entre les portions latérales 62 et la portion centrale 64 se fait par l'intermédiaire d'une arête en biseau 66. Un ergot 54 semblable à celui décrit ci-dessus est disposé sur la plage 52.

Les figures 5a et 5b illustrent le cas où la plaquette de coupe est suffisamment épaisse et solide pour que la hauteur h2 de la portion centrale 64 des saillies latérales 50a soit nulle. La plage 52 dépourvue de saillie s'étend alors sur toute la largeur de la base 38.

Lorsque la zone de coupe de l'une des ailes ne travaille plus de manière satisfaisante, la deuxième zone de coupe peut être mise en oeuvre en retournant autour de l'axe BB la plaquette 12 sur le porte-plaquette 10.

Ainsi est proposé un outil de coupe à plaquette rapportée dont la structure de la plaquette 12 et du porte-plaquette 10 garantit un positionnement tridimensionnel particulièrement précis et reproductible, permettant à l'opérateur d'effectuer son remplacement de manière sûre et efficace.

La présente description n'a été donnée qu'à titre indicatif. Ainsi, un outil de coupe comportant une gorge sur la plaquette et un ergot sur le porte-plaquette ou ne présentant qu'une vis et deux ensembles d'ergot et de gorge offre les mêmes avantages que ceux proposés dans le mode de réalisation présenté ci-dessus.

## Revendications

1. Outil de coupe à plaquette rapportée, du type comportant :
- un porte-plaquette (10) comprenant une assise (24) munie de creusures (26), rectilignes, définissant un axe longitudinal AA,
- une plaquette d'usinage (12) qui comprend une base (38) destinée à prendre place contre l'assise (24) du porte-plaquette (10), ladite base étant dotée de saillies (50) rectilignes, parallèles à l'axe AA et de forme complémentaire à celle des creusures (26), et
- des moyens de fixation de la plaquette (12) sur le porte-plaquette (10),
**caractérisé en ce que** ladite plaquette (12) comporte une plage (52) libre de saillie, intercalée entre lesdites saillies, et **en ce que** ledit porte-plaquette (10) comporte une plage (28) libre de creusures, en regard de ladite plage (52) de la plaquette, et
**en ce que** ledit porte-plaquette (10) et ladite plaquette (12) comportent, en outre, disposés sur chacune desdites plages, des moyens de positionnement longitudinal de l'un par rapport à l'autre.

2. Outil selon la revendication 1, **caractérisé en ce que** lesdits moyens de positionnement comprennent une gorge (30) pratiquée dans l'une des plages et un ergot (54) disposé sur l'autre plage et destiné à être engagé dans ladite gorge.

3. Outil selon la revendication 2, **caractérisé en ce que** ladite gorge (30) est pratiquée dans la portion centrale de l'une desdites plages (28) du porte-plaquette et (52) de la plaquette.

4. Outil selon l'une des revendications 2 et 3, **caractérisé en ce que** ladite gorge (30) est de forme oblongue et comprend un fond (32) et une paroi (34), comportant deux portions semi-cylindriques (35) reliées par deux portions planes (36) perpendiculaires à l'axe AA et définissant sa longueur.

5. Outil selon l'une des revendications 3 et 4, **caractérisé en ce que** ledit ergot est disposé dans la portion centrale de la plage (28) du porte-plaquette (10) ou (52) de la plaquette (12) laissée libre par la gorge (30).

6. Outil selon l'une des revendications 3 à 5, **caractérisé en ce que** ledit ergot (54) est de forme oblongue et comprend une extrémité (56) et une paroi (58), comportant deux portions semi-cylindriques (61) reliées entre elles par des portions planes (60) perpendiculaire à l'axe AA et définissant sa longueur, légèrement plus faible que la longueur de la gorge (30).

7. Outil selon l'une des revendications 1 à 6, **caractérisé en ce que** ladite plaquette (12) comporte deux saillies latérales (50a) s'étendant sur toute la longueur de la base, et au moins deux saillies intermédiaires (50b) disposées entre lesdites saillies latérales et définissant entre elles (50a, 50b) ladite plage (52).

8. Outil selon la revendication 7, **caractérisé en ce que** les saillies latérales (50a) présentent une concavité dans le sens longitudinal, de manière à ce que leurs extrémités soient en contact avec l'assise (24) du porte-plaquette (10).

9. Outil selon la revendication 7, **caractérisé en ce que** les arêtes des saillies latérales (50a) sont droites et présentent deux portions externes (62) de hauteur h1, reliées par une portion centrale (64) bordant ladite plage (52) et de hauteur h2, inférieure à la hauteur h1.

10. Outil selon la revendication 9, **caractérisé en ce que** la transition entre les portions externes (62) et la portion centrale (64) se fait par l'intermédiaire d'une arête en biseau (66).

11. Outil selon la revendication 8, **caractérisé en ce que** les arêtes des saillies (50) sont courbes.

12. Outil selon l'une des revendications 2 à 11, **caractérisé en ce que** lesdits moyens de fixation sont constitués de deux vis (14) prenant place dans des trous (46), (48), (20) et (22) ménagés dans la plaquette (12) et dans le porte-plaquette (10) et disposés symétriquement par rapport au centre des plages (28) et (50), ledit ergot (54) et ladite gorge (30) étant disposés au milieu desdits trous.
